# EUROPÄISCHE PATENTSCHRIFT

(11) **EP 1 668 053 B1**
(45) Veröffentlichungstag und Bekanntmachung des Hinweises auf die Patenterteilung: **13.06.2007**
(21) Anmeldenummer: 04787241.1
(22) Anmeldetag: 21.09.2004
(51) Int. Cl.: C08G 18/22, C09D 5/04, C08L 75/02

(54) **FLÜSSIGE RHEOLOGIEHILFSMITTEL, VERFAHREN ZU IHRER HERSTELLUNG UND IHRE VERWENDUNG**
AUXILIARY LIQUID RHEOLOGICAL MEDIUM, METHOD FOR THE PRODUCTION AND USE THEREOF
AUXILIAIRE RHEOLOGIQUE LIQUIDE, SON PROCEDE DE PRODUCTION ET SON UTILISATION

(30) Priorität: 04.10.2003 DE 10346157
(43) Veröffentlichungstag der Anmeldung: 14.06.2006
(73) Patentinhaber: BASF Coatings AG, 48165 Münster (DE)
(72) Erfinder: ALPERT, Christina, 48161 Münster (DE); RINK, Heinz-Peter, 48153 Münster (DE)
(86) Internationale Anmeldenummer: PCT/EP2004/052348
(87) Internationale Veröffentlichungsnummer: WO 2005/033166

(56) Entgegenhaltungen:
- EP-A- 0 376 674
- DE-A- 10 042 152
- DE-A- 19 924 170
- US-A1- 2003 170 395

## Beschreibung

Die vorliegende Erfindung betrifft neue, flüssige Rheologiehilfsmittel. Außerdem betrifft die vorliegende Erfindung ein neues Verfahren zur Herstellung von flüssigen Rheologiehilfsmitteln. Nicht zuletzt betrifft die vorliegende Erfindung die Verwendung der neuen, flüssigen Rheologiehilfsmittel und der nach dem neuen Verfahren hergestellten flüssigen Rheologiehilfsmittel, insbesondere für die Herstellung von Beschichtungsstoffen, Klebstoffen und Dichtungsmassen.

Beschichtungsstoffe müssen nach ihrer Applikation eine sehr gute Standsicherheit aufweisen, damit sie die Herstellung vergleichsweise dicker Lackschichten und Lackierungen ermöglichen, ohne dass es hierbei zu der äußerst störenden Läuferbildung insbesondere an senkrecht stehenden Substraten kommt.

"Läuferbildung" ist die Bezeichnung für das Absacken von aufgetragenen Beschichtungsstoffen an vertikalen oder geneigten Flächen, wodurch sich ein unschönes Erscheinungsbild der resultierenden Beschichtungen ergibt. Tritt dieses Ablaufphänomen in größeren Bereich auf, wird es auch als »Gardinenbildung« bezeichnet. Im Allgemeinen unterscheidet man zwischen Läufern an Kanten, Ecken und Löchern (Initiatorpunkte) und dem großflächigen Absacken von Beschichtungen auf Flächen, was auch als »Schieben« bezeichnet wird. Die Bildung von Läufern kann ihre Ursachen in einer falschen Zusammensetzung oder in einer falschen Applikation des Beschichtungsstoffs haben. Als "Läufergrenze" wird im Allgemeinen die Trockenfilmdicke des applizierten Beschichtungsstoffs in µm angegeben, oberhalb derer nach Spritzapplikation an einem senkrecht stehenden, mit Löchern versehenen Blech die ersten Läufer auftreten (vgl. hierzu auch Römpp-Online 2002, "Läuferbildung", »Läufergrenze« und "Gardinenbildung"). Im Allgemeinen wird die Trockenfilmdicke oder Trockenschichtdicke des applizierten Beschichtungsstoffs, ab der an vertikalen oder geneigten Flächen die geschilderten Ablaufphänomene auftreten, als "Stabilitätsgrenze" bezeichnet.

In der Praxis stellen diese Ablaufphänomene ein schwerwiegendes Problem dar, da sie bei der industriellen Beschichtung komplex geformter dreidimensionaler Substrate, insbesondere bei der Automobilserienlackierung, die Prozesssicherheit erniedrigen und die Ausschussrate erhöhen. So besteht bei der Lackierung von Automobilkarosserien die Gefahr, dass bei der elektrostatischen Spritzapplikation (ESTA) an scharfen Kanten der Karosserien zu dicke Schichten aufgebaut werden. Wenn deren Dicke die Stabilitätsgrenze des betreffenden Beschichtungsstoffs überschreitet, kommt es bei der weiteren Verarbeitung, insbesondere bei der Trocknung und der thermischen Härtung zu den störenden Ablaufphänomenen. Andererseits darf die Viskosität der Beschichtungsstoffe nicht so hoch sein, dass bei der Applikation Probleme auftreten und kein guter Verlauf der applizierten Lackschichten mehr möglich ist.

Diese Probleme treten verstärkt bei Beschichtungsstoffen, insbesondere Klarlacken, mit hohem Festkörpergehalt auf, die von der Fachwelt auch als "High Solid Klarlacke" bezeichnet werden. Die Verwendung von Beschichtungsstoffen mit hohem Festkörpergehalt, insbesondere von High Solid Klarlacken, ist indes aus ökologischen Gründen vorteilhaft, weil sie bei der Applikation und der Härtung weniger leicht flüchtige organische Materialien emittieren. Gleichzeitig müssen auch diese Beschichtungsstoffe Lackierungen, insbesondere Klarlackierungen, liefern, die hinsichtlich des Glanzes, der Transparenz und Klarheit, der Kratzfestigkeit, der Witterungsbeständigkeit und der Vergilbungsbeständigkeit allen Ansprüchen des Marktes genügen.

Dieses problematische Verhalten dieser Beschichtungsstoffe, insbesondere der High Solid Klarlacke, wird dadurch hervorgerufen, dass sie trotz eines niedrigen Lösemittelgehaltes niedrigviskos sein müssen, um durch die Spritzapplikation leicht applizierbar zu sein. Das bedeutet aber, dass im Gegensatz zu Beschichtungsstoffen mit höheren Lösemittelgehalten nur noch ein geringer Anstieg der Viskosität durch Verdampfen bei der Spritzapplikation eintreten kann. Dies macht eine Ausrüstung mit Rheologiehilfsmitteln grundsätzlich erforderlich.

Vergleichbare Probleme treten auch bei Klebstoffen und Dichtungsmassen, insbesondere solchen, die einen hohen Festkörpergehalt haben, auf.

Rheologiehilfsmittel zur Einstellung eines strukturviskosen Verhaltens (vgl. Römpp Lexikon Lacke und Druckfarben, Georg Thieme Verlag, Stuttgart, New York, 1998, "Strukturviskosität", Seite 546) und sie enthaltende strukturviskose Beschichtungsstoffe sind seit langem bekannt. Insbesondere kann das rheologische Verhalten von Beschichtungsstoffen kann mit Hilfe von kristalline Harnstoffderivaten enthaltenden, flüssigen Rheologiehilfsmittel positiv beeinflußt werden. Diese Rheologiehilfsmittel, die häufig auch als Thixotropierungsmittel bezeichnet werden, werden bekanntermaßen aus Polyisocyanaten und Aminen in der Gegenwart von Zusatzstoffen in situ hergestellt. Beispielhaft wird hierzu auf die deutschen Auslegeschriften und Patentanmeldungen und das deutsche Patent DE 23 60 019 B2, DE 23 59 9123 B1, DE 23 59 129 B1, DE 198 11 471 A1, DE 27 51 761 C2, DE 199 24 170 A1, DE 199 24 172 A1, DE 199 24 171 A1, DE 100 42 152 A1, DE 101 26 647 A1 oder DE 101 26 648 A1, das europäische Patent EP 0 192 304 B1 oder die Internationalen Patentanmeldungen WO 94/22968 A1 und WO 00/37520 A1 verwiesen.

Diese bekannten, flüssigen Rheologiehilfsmittel enthalten aber die kristalline Harnstoffderivate lediglich in einer Menge von bis zu 10 Gew.-%, bezogen auf ein Rheologiehilfsmittel. Dies bedeutet aber, dass eine vergleichsweise großen Menge an flüssigem Rheologiehilfsmittel in die Beschichtungsstoffe, insbesondere in die High Solid Klarlacke, eingebracht werden muss, damit ein Gehalt an kristallinen Harnstoffderivaten erreicht wird, der für die positive Beeinflussung des rheologischen Verhaltens ausreichend ist. Durch die vergleichsweise große Menge an flüssigem Rheologiehilfsmittel wird aber der Festkörpergehalt der Beschichtungsstoffe in unerwünschter Weise erniedrigt.

Man hat versucht, diesem Problem dadurch zu begegnen, dass man den Gehalt der bekannten, flüssigen Rheologiehilfsmittel an kristallinen Harnstoffderivaten weiter erhöht. Dies führt aber in den allermeisten Fällen dazu, dass die betreffenden flüssigen Rheologiehilfsmittel kaum noch fließfähig und daher nur noch schlecht oder gar nicht mehr verarbeitbar sind.

Aufgabe der vorliegenden Erfindung ist es, neue, flüssige Rheologiehilfsmittel bereitzustellen, die mindestens ein Harnstoffderivat und mindestens einen Zusatzstoff enthalten und die die Nachteile des Standes der Technik nicht mehr länger aufweisen, sondern die auch bei einem Gehalt an Harnstoffderivaten von mehr als 10 Gew.-%, bezogen auf das neue, flüssigen Rheologiehilfsmittel, in einfacher Weise herstellbar, fließfähig und leicht verarbeitbar sind.

Mit Hilfe der neuen, flüssigen Rheologiehilfsmittel sollen sich größere Mengen an Beschichtungsstoffen, Klebstoffen und Dichtungsmassen, insbesondere an High Solid Klarlacken, ausrüsten lassen als mit der gleichen Menge an üblichen und bekannten, flüssigen Rheologiehilfsmitteln.

Die mit den neuen, flüssigen Rheologiehilfsmitteln ausgerüsteten, neuen Beschichtungsstoffe, Klebstoffe und Dichtungsmassen, insbesondere die neuen High Solid Klarlacke, sollen eine besonders hohe Lagerstabilität haben. Ihre Standsicherheit soll besonders hoch sein, damit sie problemlos in hohen Schichtdicken appliziert werden können, ohne dass es zu einer Läuferbildung kommt.

Die neuen Beschichtungsstoffe sollen Beschichtungen, Klebschichten und Dichtungen mit hervorragenden anwendungstechnischen Eigenschaften liefern. Insbesondere sollen die neuen High Solid Klarlacke Klarlackierungen mit besonders hohen Schichtdicken liefern, die einen hervorragenden Verlauf haben, frei von Oberflächenstörungen, wie Stippen, Läufer, Nadelstiche, Orangenhaut, Spannungsrisse (Mudcracking) oder Krater sinds und einen hervorragenden optischen Gesamteindruck (Appearance), eine hohe Kratzfestigkeit, eine hohe Witterungsstabiltät und eine hohe Schwitzwasserbeständigkeit aufweisen.

Dem gemäß wurden die neuen, flüssigen Rheologiehilfsmittel gefunden, die
(A) mindestens ein Harnstoffderivat, herstellbar, indem man
   (a1) mindestens eine Verbindung mit mindestens einer Isocyanatgruppe mit
   (a2) mindestens einem Reaktionspartner, ausgewählt aus der Gruppe, bestehend aus primären und sekundären Monoaminen und Polyaminen sowie Wasser, in der Gegenwart
   (a3) mindestens einer organischen Bismutverbindung als Katalysator umsetzt; und
(B) mindestens einen Zusatzstoff
enthalten und die im Folgenden als "erfindungsgemäße Rheologiehilfsmittel" bezeichnet werden.

Außerdem wurde das neue Verfahren zur Herstellung von flüssigen Rheologiehilfsmitteln, enthaltend mindestens ein Harnstoffderivat (A) und mindestens einen Zusatzstoff (B), gefunden, bei dem man das Harnstoffderivat (A) durch die Umsetzung mindestens einer Verbindung (a1) mit mindestens einer Isocyanatgruppe mit mindestens einem Reaktionspartner (a2), ausgewählt aus der Gruppe, bestehend aus primären und sekundären Monoaminen und Polyaminen sowie Wasser; in der Gegenwart mindestens einer organischen Bismutverbindung (a3) als Katalysator in mindestens einem flüssigen Zusatzstoff (B) herstellt und das im Folgenden als "erfindungsgemäßes Verfahren« bezeichnet wird.

Nicht zuletzt wurde die neue Verwendung der erfindungsgemäßen Rheologiehilfsmittel und der mit Hilfe des erfindungsgemäßen Verfahrens hergestellten, flüssigen Rheologiehilfsmittel zur Herstellung von neuen Beschichtungsstoffen, Klebstoffen und Dichtungsmassen gefunden, die im Folgenden als "erfindungsgemäße Verwendung" bezeichnet wird.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag mit Hilfe der erfindungsgemäßen Rheologiehilfsmittel, des erfindungsgemäßen Verfahrens und der erfindungsgemäßen Verwendung gelöst werden konnte.

Insbesondere war es überraschend, dass die erfindungsgemäßen Rheologiehilfsmittel auch bei einem Gehalt an Harnstoffderivaten von mehr als 10 Gew.-%, bezogen auf ein erfindungsgemäßes Rheologiehilfsmittel, in einfacher Weise herstellbar, fließfähig und leicht verarbeitbar waren.

Mit Hilfe der erfindungsgemäßen Rheologiehilfsmittel ließen sich größere Mengen an Beschichtungsstoffen, Klebstoffen und Dichtungsmassen, insbesondere an High Solid Klarlacken, ausrüsten als mit der gleichen Menge an üblichen und bekannten, flüssigen Rheologiehilfsmitteln.

Die mit den erfindungsgemäßen Rheologiehilfsmitteln ausgerüsteten, erfindungsgemäßen Beschichtungsstoffe, Klebstoffe und Dichtungsmassen, insbesondere die erfindungsgemäßen High Solid Klarlacke, wiesen eine besonders hohe Lagerstabilität auf. Ihre Standsicherheit war besonders hoch, sodass sie problemlos in hohen Schichtdicken appliziert werden konnten, ohne dass es zu einer Läuferbildung kam.

Die erfindungsgemäßen Beschichtungsstoffe, Klebstoffe und Dichtungsmassen lieferten erfindungsgemäße Beschichtungen, Klebschichten und Dichtungen mit hervorragenden anwendungstechnischen Eigenschaften. Insbesondere lieferten die neuen High Solid Klarlacke Klarlackierungen mit besonders hohen Schichtdicken, die einen hervorragenden Verlauf hatten, frei von Oberflächenstörungen, wie Läufer, Nadelstiche, Orangenhaut, Spannungsrisse (Mudcracking) oder Krater waren und einen hervorragenden optischen Gesamteindruck (Appearance), eine hohe Kratzfestigkeit, eine hohe Witterungsstabiltät und eine hohe Schwitzwasserbeständigkeit aufwiesen.

Die erfindungsgemäßen Rheologiehilfsmittel enthalten mindestens ein, insbesondere ein, Harnstoffderivat (A). Vorzugsweise ist das Harnstoffderivat (A) fest. Dabei kann es amorph, teilkristallin bzw. teilamorph oder kristallin sein. Bevorzugt ist es kristallin. Besonders bevorzugt ist das kristalline Harnstoffderivat (A) nadelförmig. Ganz besonders bevorzugt ist das kristalline Harnstoffderivat (A) nadelförmig und zum Teil oder insgesamt helixartig verdrillt. Insbesondere haben die Harnstoffderivat-Kristalle (A) eine Teilchengröße von 0,1 bis 6 µm. Speziell sind 80% der Harnstoffderivat-Kristalle (A) < 2 µm.

Die Harnstoffderivate sind herstellbar, indem man
(a1) mindestens eine Verbindung mit mindestens einer Isocyanatgruppe und vorzugsweise mindestens zwei, insbesondere zwei, Isocyanatgruppen mit
(a2) mindestens einem Reaktionspartner, ausgewählt aus der Gruppe,
   - bestehend aus primären und sekundären Monoaminen, vorzugsweise primären Monoaminen; primären und sekundären Polyaminen, vorzugsweise primären Diaminen; sowie Wasser;
   - insbesondere bestehend aus primären Monoaminen und primären Diaminen;
   umsetzt.

Beispiele geeigneter Verbindungen (a1) sind aus den deutschen Patentanmeldungen
- DE 100 42 152 A1, Seite 4, Abs. [0037], bis Seite 6, Abs. [0063], und
- DE 101 26 647 A1, Seite 3, Abs. [0025], bis Seite 6, Abs. [0053],
bekannt.

Beispiele geeigneter Reaktionspartner (a2) sind ebenfalls aus den deutschen Patentanmeldungen
- DE 100 42 152 A1, Seite 4, Absätze [0034] bis [0036], und
- DE 101 26 647 A1, Seite 2, Absätze [0021] bis [0024],
bekannt.

Vorzugsweise werden die Verbindungen (a1) und (a2) in solchen Mengen miteinander umgesetzt, dass das Äquivalentverhältnis von Isocyanatgruppen zu Aminogruppen bei 2 : 1 bis 1 : 2, bevorzugt 1,6 : 1 bis 1 : 1,6 und insbesondere 1,2 : 1 bis 1 : 1,2 liegt.

Wenn Polyamine und Monoamine (a2) zugleich verwendet werden, liegt das Äquivalentverhältnis von Aminogruppen in den Polyaminen (a2) zu den Aminogruppen in den Monoaminen (a2) vorzugsweise bei 4 : 1 bis 1 : 2, bevorzugt 2 : 1 bis 1 : 1 und insbesondere 1,2 : 1 bis 1: 1.

Erfindungsgemäß werden die Verbindungen (a1) und (a2) in der Gegenwart mindestens einer, insbesondere einer, organischen Bismutverbindung (a3) als Katalysator umgesetzt.

Grundsätzlich kommen als Katalysatoren alle organischen Bismutverbindungen (a3) in Betracht, die durch die Verbindungen (a1) und (a2) oder durch die Zusatzstoffe (B) nicht zersetzt werden oder deren Zersetzung nicht katalysieren. Vorzugsweise werden Bismutverbindungen (a3) verwendet, die in dem nachstehend beschriebenen Reaktionsmedium für die Umsetzung der Verbindungen (a1) und (a2) löslich sind.

Bevorzugt werden die organischen Bismutverbindungen (a3) aus der Gruppe, bestehend aus Bismutsalzen organischer Carbonsäuren und Komplexen des Bismuts mit Chelatbildnern, ausgewählt.

Bevorzugte organische Carbonsäuren sind aliphatische Carbonsäuren, besonders bevorzugt aliphatische Monocarbonsäuren, ganz besonders bevorzugt Monocarbonsäuren, die langkettige Alkylgruppen, vorzugsweise langkettige Alkylgruppen mit 6 bis 16, insbesondere 7 bis 10, Kohlenstoffatomen, enthalten.

Insbesondere werden die Monocarbonsäuren aus der Gruppe, bestehend aus Octancarbonsäure, 2-Ethylhexancarbonsäure und Neodecancarbonsäure, ausgewählt.

Als Chelatbildner kommen grundsätzlich alle organischen Verbindungen, insbesondere nichtaromatischen Verbindungen, in Betracht, die Chelatliganden zu bilden vermögen. Hierbei handelt es sich um organische Verbindungen mit mindestens zwei, insbesondere zwei, funktionellen Gruppen, die an Metallatome oder -ionen koordinieren können. Üblicherweise handelt es sich bei diesen funktionellen Gruppen um Elektronendonatoren, welche Elektronen an Metallatome oder -ionen als Elektronenakzeptoren abgeben. Bevorzugt handelt es sich bei dem funktionellen Gruppen um Carbonylgruppen. Ergänzend wird auf Römpp Chemie Lexikon, Georg Thieme Verlag, Stuttgart, 1989, Band 1, Seite 634, verwiesen. Besonders bevorzugt sind die Chelatbildner 1,3-Diketone. Insbesondere werden die 1,3-Diketone aus der Gruppe, bestehend aus Acetylaceton, Acetessigsäureethylester, Tetramethylheptandion und Hexafluorpentandion, insbesondere aus Tetramethylheptandion und Hexafluorpentandion, ausgewählt.

Beispiele besonders vorteilhafter organischer Bismutverbindungen (a3) sind demnach die Bismutsalze der Octancarbonsäure, 2-Ethylhexancarbonsäure und Neodecancarbonsäure sowie die Chelatkomplexe von Bismut mit Tetramethylheptandion und Hexafluorpentandion.

Der Gehalt der erfindungsgemäßen Rheologiehilfsmittel an den Harnstoffderivaten (A) kann breit variieren. Es ist ein besonderer Vorteil der erfindungsgemäßen Rheologiehilfsmittel, dass sie die Harnstoffderivate (A), bezogen auf ein erfindungsgemäßes Rheologiehilfsmittel, in einer Menge von mehr als 10 Gew.-%, insbesondere mehr als 10 bis 20 Gew.-%, enthalten können.

Die erfindungsgemäßen Rheologiehilfsmittel enthalten des Weiteren mindestens einen Zusatzstoff (B) und insbesondere mindestens zwei Zusatzstoffe (B). Der Zusatzstoff (B) oder mindestens einer der Zusatzstoffe (B) wird so ausgewählt, dass die erfindungsgemäßen Rheologiehilfsmittel flüssig sind. Vorzugsweise sind die erfindungsgemäßen Rheologiehilfsmittel Dispersionen, insbesondere Suspensionen, der Harnstoffderivate (A) in dem Zusatzstoff (B) oder mindestens einem der Zusatzstoffe (B). Vorzugsweise wird der Zusatzstoff (B) oder mindestens einer der Zusatzstoffe (B) so ausgewählt, dass sie auch als das flüssige Reaktionsmedium für die Umsetzung der Verbindungen (a1) und (a3) in der Gegenwart der organischen Bismutverbindungen (a3) dienen können.

Insbesondere wird der Zusatzstoff (B) aus der Gruppe, bestehend aus Pigmenten, physikalisch, thermisch und/oder mit aktinischer Strahlung härtbaren, oligomeren und polymeren Bindemitteln, thermisch oder thermisch und mit aktinischer Strahlung härtbaren Vernetzungsmitteln, thermisch und/oder mit aktinischer Strahlung härtbaren Reaktiverdünnern, organischen Lösemitteln, UV-Absorbern, Lichtschutzmitteln, Radikalfängern, Entlüftungsmitteln, Slipadditiven, Polymerisationsinhibitoren, Entschäumern, Emulgatoren, Netz- und Dipergiermittein, Haftvermittlern, Verlaufmitteln, filmbildenden Hilfsmitteln, Flammschutzmitteln, Sikkativen, Trockungsmitteln, Hautverhinderungsmitteln, Korrosionsinhibitoren, Wachsen und Mattierungsmitteln; ausgewählt, wobei die Auswahl derart erfolgt, dass flüssige Reaktionsmedien und die erfindungsgemäßen Rheologiehilfsmittel resultieren.

Beispiele geeigneter Zusatzstoffe (B) sind aus den deutschen Patentanmeldungen
- DE 100 42 152 A1, Seite 3, Absätze [0019] bis [0030], Seite 6, Absätze [0064] bis [0066), und Seite 7, Abs. [0071], bis Seite 11, Abs. [0093], und
- DE 101 26 647 A1, Seite 6, Absätze [0055] bis [0062] und [0065],
bekannt.

Die Herstellung der Harnstoffderivate (A) erfolgt vorzugsweise nach dem erfindungsgemäßen Verfahren durch die Umsetzung mindestens einer Verbindung (a1) mit mindestens einem Reaktionspartner (a2) in der Gegenwart mindestens einer organischen Bismutverbindung (a3) als Katalysator in mindestens einem flüssigen Zusatzstoff (B) als Reaktionsmedium. Vorzugsweise wird der Zusatzstoff (B) oder werden die Zusatzstoffe (B) so ausgewählt, dass bei der Umsetzung direkt die erfindungsgemäßen Rheologiehilfsmittel resultieren. Bevorzugte Reaktionsmedien enthalten als Zusatzstoffe (B) insbesondere organische Lösemittel und/oder flüssige, thermisch und/oder mit aktinischer Strahlung härtbare Reaktiverdünner und/oder Vernetzungsmittel sowie gegebenenfalls physikalisch, thermisch und/oder mit aktinischer Strahlung härtbare, oligomere und polymere Bindemittel und/oder Entschäumer, Emulgatoren und/oder Netz- und/oder Dipergiermittel, oder sie bestehen hieraus. Vorzugsweise werden sie in solchen Mengen angewandt, dass der vorstehend beschriebene Gehalt an Harnstoffderivaten (A) in den erfindungsgemäßen Rheologiehilfsmitteln resultiert.

Das Gewichtsverhältnis von Verbindungen (a1) und (a2) zu organischen Bismutverbindungen (a3) kann bei dem erfindungsgemäßen Verfahren sehr breit variieren. Vorzugsweise werden die organischen Bismutverbindungen (a3) in einer Menge eingesetzt, die katalytisch wirkt, indes keine nachteiligen Änderungen in den resultierenden erfindungsgemäßen Rheologiehilfsmitteln hervorruft. Bevorzugt werden die organischen Bismutverbindungen (a3) in einer Menge eingesetzt, dass das Molverhältnis von Isocyanatgruppen (NCO) in den Verbindungen (a1) zu Bismut (Bi) 300 : 1 bis 20 : 1, besonders bevorzugt 260 : 1 bis 25 : 1 und insbesondere 255 : 1 bis 30 : 1 beträgt.

Methodisch gesehen bietet das erfindungsgemäße Verfahren keine Besonderheiten, sondern kann wie in den deutschen Patentanmeldungen
- DE 100 42 152 A1, Seite 3, Abs. [0068], und
- DE 101 26 647 A1, Seite 6, Absätze [0067] bis [0068],
beschrieben, durchgeführt werden.

Die erfindungsgemäßen Rheologiehilfsmittel weisen ein besonders ausgeprägtes strukturviskoses Verhalten auf.

Die erfindungsgemäßen Rheologiehilfsmittel sind außerordentlich breit anwendbar und insbesondere hervorragend zur Herstellung von Beschichtungsstoffen, Klebstoffen und Dichtungsmassen geeignet. Die erfindungsgemäßen Beschichtungsstoffe, Klebstoffe und Dichtungsmassen können physikalisch, thermisch, mit aktinischer Strahlung und thermisch und mit aktinischer Strahlung (Dual-Cure) härtbar sein.

Die erfindungsgemäßen Beschichtungsstoffe, Klebstoffe und Dichtungsmassen können außer dem erfindungsgemäßen Rheologiehilfsmittel beispielsweise die in den deutschen Patentanmeldungen DE 199 24 171 A1, Seite 5, Zeile 47, bis Seite 9, Zeile 32, im Detail beschriebenen Bestandteile enthalten. Die Beschichtungsstoffe, Klebstoffe und Dichtungsmassen können durch das in der deutschen Patentanmeldung auf Seite 9, Zeilen 33 bis 54, beschriebene Verfahren hergestellt werden. Beispiele geeigneter Substrate und Beschichtungsverfahren werden ebenfalls in der deutschen Patentanmeldung auf Seite 9, Zeile 55, bis Seite 10, Zeile 23, beschrieben. Beispiele geeigneter Verfahren für die thermische Härtung und die Härtung mit aktinischer Strahlung sind beispielsweise aus der internationalen Patentanmeldung WO 98/40170, Seite 17, Zeile 18, bis Seite 19, Zeile 20, bekannt. Ergänzend wird auf die deutsche Patentanmeldung DE 100 42 152 A1, Seite 6, Abs. [0067], bis Seite 12, Abs. [0112], verwiesen.

Die erfindungsgemäßen strukturviskosen Beschichtungsstoffe werden vorzugsweise als Klarlacke, insbesondere als High Solid Klarlacke, und/oder als farb- und/oder effektgebende Beschichtungsstoffe für die Herstellung von Klarlackierungen sowie ein- und mehrschichtiger, farb- und/oder effektgebender, elektrisch leitfähiger, magnetisch abschirmender und/oder fluoreszierender Beschichtungen verwendet.

Die Stabilität der erfindungsgemäßen strukturviskosen Beschichtungsstoffe, Klebstoffe und Dichtungsmassen unter statischen und dynamischen Bedingungen, insbesondere die Ringleitungsstabilität, sowie das Ablaufverhalten bei der Applikation und der Härtung sind hervorragend.

Demnach sind die erfindungsgemäßen strukturviskosen Beschichtungsstoffe, Klebstoffe und Dichtungsmassen hervorragend für die Beschichtung, das Verkleben und das Abdichten von Karosserien von Fortbewegungsmitteln und Teilen hiervon, Bauwerken und Teilen hiervon, Türen, Fenstern, Möbeln, industriellen Kleinteilen, mechanischen, optischen und elektronischen Bauteilen, Coils, Container, Emballagen, Glashohlkörpern und Gegenständen des täglichen Bedarfs hervorragend geeignet.

Die aus den erfindungsgemäßen strukturviskosen Beschichtungsstoffen hergestellten erfindungsgemäßen Beschichtungen sind hart, kratzfest, witterungsstabil, chemikalienstabil und vor allem von einer außerordentlich hohen Brillanz.

Die aus den erfindungsgemäßen strukturviskosen Klebstoffen hergestellten Klebschichten verbinden auf Dauer die unterschiedlichsten hiermit verklebten Substrate. Es tritt auch unter klimatisch extremen Bedingungen und/oder stark schwankenden Temperaturen kein Verlust der Klebkraft ein.

Die aus den erfindungsgemäßen strukturviskosen Dichtungsmassen hergestellten Dichtungen dichten auf Dauer die hiermit abgedichteten Substrate auch in der Gegenwart stark aggressiver Chemikalien ab.

Somit sind die mit den erfindungsgemäßen Beschichtungen beschichteten, mit den erfindungsgemäßen Klebschichten verklebten und/oder mit den erfindungsgemäßen Dichtungen abgedichteten Substrate von einer außerordentlich langen Lebensdauer und einem besonders hohen Gebrauchswert, was sie bei der Herstellung und Anwendung besonders wirtschaftlich macht.

### Beispiele

### Herstellbeispiel 1

Die Herstellung der Lösung eines thermisch härtbaren Methacrylatcopolymerisats

In einem geeigneten Reaktor, ausgestattet mit einem Rührer, zwei Tropftrichtern für die Monomermischung und die Initiatorlösung, Stickstoffeinleitungsrohr, Thermometer und Rückflusskühler, wurden 813 Gewichtsteile einer Fraktion aromatischer Kohlenwasserstoffe mit einem Siedebereich von 158 - 172°C eingewogen. Das Lösemittel wurde auf 140 °C aufgeheizt. Nach Erreichen von 140 °C wurden eine Monomermischung aus 483 Gewichtsteilen n-Butylmethacrylat, 663 Gewichtsteilen Styrol, 337 Gewichtsteilen Hydroxyethylmethacrylat und 31 Gewichtsteilen Methacrylsäure innerhalb von 4 Stunden, und eine Initiatorlösung von 122 Gewichtsteilen t-Butylperethylhexanoat in 46 Gewichtsteilen des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 65 Gew.-%, bestimmt in einem Umluftofen (1 h bei 130 °C). Sie wurde mit einer Mischung aus Methoxypropylacetat, Butylglykolacetat und Butylacetat auf einen Feststoffgehalt von 53 Gew.-% verdünnt. Die Lösung des Methacrylatcopolymerisats wurde als organisches Medium zur Herstellung des Rheologiehilfsmittels verwendet.

### Beispiel 1

### Die Herstellung eines Rheologiehilfsmittels

In einem geeigneten Rührbehälter wurden 69,85 Gewichtsteile der Lösung des Methacrylatcopolymerisats des Herstellbeispiel 1, 8,03 Gewichtsteilen Benzylamin und 1,0 Gewichtsteile Bismutoctoat vorgelegt und mit einem Dissolver vermischt, sodass die Mischung 1 resultierte. In einem anderen Behälter wurden 6,29 Gewichtsteile Hexamethylendiisocyanat mit 14,83 Gewichtsteilen Butylacetat vermischt. Die resultierende Mischung 2 wurde während 4 Minuten zur Mischung 1 unter starkem Rühren zudosiert. Das resultierende Rheologiehilfsmittel wurde weitere zehn Minuten gerührt. Es wies ein ausgesprochen ausgeprägtes strukturviskoses Verhalten auf. Es war lagerstabil und hervorragend verarbeitbar, obwohl der Gehalt an Harnstoffderivat (A), bezogen auf das Rheologiehilfsmittel, bei 14,32 Gew.-% lag. Wegen dieses hohen Gehalts mussten nur geringen Mengen an Rheologiehilfsmittel zur Herstellung von ausgeprägt strukturviskosen Beschichtungsstoffen eingesetzt werden.

### Beispiele 2

Die Herstellung eines High Solid Klarlacks und einer farbgebenden Mehrschichtlackierung mit einer Klarlackierung

Es wurde ein High Solid Klarlack durch Vermischen der folgenden Bestandteile und Homogenisieren der resultierenden Mischung hergestellt:
- 54,5 Gewichtsteile eines üblichen und bekannten Methacrylatcopolymerisats (vgl. die deutsche Patentanmeldung DE 197 25 188 A1, Seite 7, Zeilen 24 bis 37, »1.2 Acrylatharz B«),
- 19,1 Gewichtsteile eines handelsüblichen Melamin- Formaldehydharzes (Luwipal ® 018 der Firma BASF Aktiengesellschaft),
- 2,0 Gewichtsteile Butyldiglykol,
- 1,0 Gewichtsteile einer handelsüblichen, mit einem Amin blockierten Sulfonsäure (Nacure ® 2500 der Firma King Industries),
- 7,6 Gewichtsteile Methoxypropanol,
- 4,6 Gewichtsteile Ethylethoxypropionat,
- 0,7 Gewichtsteile eines handelsüblichen Lichtschutzmittels (Tinuvin ® 384 der Firma Ciba Specialty Chemicals),
- 0,6 Gewichtsteile eines weiteren handelsüblichen Lichtschutzmittels (Tinuvin ® 292 der Firma Ciba Specialty Chemicals),
- 0,3 Gewichtsteile eines handelsüblichen Additivs (Byk ® 390 der Firma Byk Chemie),
- 0,2 Gewichtsteile eines weiteren handelsüblichen Additivs (Byk ® 325 der Firma Byk Chemie),
- 4,8 Gewichtsteile Butylacetat und
- 4,6 Gewichtsteile des Rheologiehilfsmittels gemäß Beispiel 1.

Der High Solid Klarlack war unter statischen und dynamischen Bedingungen, insbesondere unter dynamischen Bedingungen in den Ringleitungen von Lackieranlagen, völlig stabil. Er wies ein ausgeprägtes strukturviskoses Verhalten auf und war dabei sehr leicht verarbeitbar. Insbesondere konnte er hervorragend durch Spritzapplikation appliziert werden, wobei hohe Schichtdicken erreicht wurden, ohne dass es zu einer Läuferbildung kam.

Für die Herstellung einer farbgebenden Mehrschichtlackierung mit einer Klarlackierung, hergestellt aus dem High Solid Klarlack, wurden übliche und bekannte, mit einer Elektrotauchlackierung beschichtete Stahlprüftafeln verwendet. Die Stahlprüftafeln wurden zunächst mit einem handelsüblichen, wässrigen, schwarzen Füller der Firma BASF Coatings AG und nach dem Ablüften nass-in-nass mit einem handelsüblichen, schwarzen Wasserbasislack der Firma BASF Coatings AG beschichtet. Abschließend wurde nach dem Ablüften der High Solid Klarlack nass-in-nass appliziert, wonach die drei Schichten während 45 Minuten bei 130 °C gemeinsam eingebrannt wurden.

Die resultierende Klarlackierung war brillant, hochglänzend, von einer hohen Abbildungsunterscheidbarkeit (DOI), kratzfest, witterungsbeständig, etch-beständig und von hoher Vergilbungsbeständigkeit und Beständigkeit gegenüber Schwitzwasser.

Sie wiesen einen hervorragenden Verlauf auf und war frei von Oberflächenstörungen, wie Stippen, Läufer, Nadelstiche, Orangenhaut, Spannungsrisse (Mudcracking) oder Krater. Insgesamt wies sie einen hervorragend optischen Gesamteindruck (Appearance) auf.

## Patentansprüche

1. Flüssige Rheologiehilfsmittel, enthaltend
(A) mindestens ein Harnstoffderivat, herstellbar, indem man
(a1) mindestens eine Verbindung mit mindestens einer Isocyanatgruppe mit
(a2) mindestens einem Reaktionspartner, ausgewählt aus der Gruppe, bestehend aus primären und sekundären Monoaminen und Polyaminen sowie Wasser, in der Gegenwart
(a3) mindestens einer organischen Bismutverbindung als Katalysator umsetzt; und
(B) mindestens einen Zusatzstoff.

2. Rheologiehilfsmittel nach Anspruch 1, **dadurch gekennzeichnet, dass** die organischen Bismutverbindung (a3) aus der Gruppe, bestehend aus Bismutsalzen organischer Carbonsäuren und Komplexen des Bismuts mit Chelatbildnern, ausgewählt sind.

3. Rheologiehilfsmittel nach Anspruch 2, **dadurch gekennzeichnet, dass** die organische Carbonsäuren aliphatische Carbonsäuren sind.

4. Rheologiehilfsmittel nach Anspruch 3, **dadurch gekennzeichnet, dass** die aliphatischen Carbonsäuren Monocarbonsäuren sind.

5. Rheologiehilfsmittel nach Anspruch 4, **dadurch gekennzeichnet, dass** die Monocarbonsäuren langkettige Alkylgruppe enthalten.

6. Rheologiehilfsmittel nach Anspruch 5, **dadurch gekennzeichnet, dass** die langkettigen Alkylgruppen 6 bis 16 Kohlenstoffatome enthalten.

7. Rheologiehilfsmittel nach Anspruch 6, **dadurch gekennzeichnet, dass** die Monocarbonsäuren aus der Gruppe, bestehend aus Octancarbonsäure, 2-Ethylhexancarbonsäure und Neodecancarbonsäure, ausgewählt sind.

8. Rheologiehilfsmittel nach Anspruch 2, **dadurch gekennzeichnet, dass** die Chelatbildner nichtaromatische Verbindungen sind.

9. Rheologiehilfsmittel nach Anspruch 8, **dadurch gekennzeichnet, dass** die Chelatbildner mindestens zwei zur Koordination an Metallatome oder -ionen befähigte funktionelle Gruppen enthalten.

10. Rheologiehilfsmittel nach Anspruch 9, **dadurch gekennzeichnet, dass** die funktionellen Gruppen Elektronendonatoren sind.

11. Rheologiehilfsmittel nach Anspruch 9 oder 10, **dadurch gekennzeichnet, dass** zur Koordination an Metallatome oder -ionen befähigte funktionelle Gruppen Carbonylgruppen sind.

12. Rheologiehilfsmittel nach Anspruch 11, **dadurch gekennzeichnet, dass** die Chelatbildner 1,3-Diketone sind.

13. Rheologiehilfsmittel nach Anspruch 12, **dadurch gekennzeichnet, dass** die Diketone aus der Gruppe, bestehend aus Acetylaceton, Acetessigsäureethylester, Tetramethylheptandion und Hexafluorpentandion, ausgewählt sind.

14. Rheologiehilfsmittel nach einem der Ansprüche 1 bis 13, **dadurch gekennzeichnet, dass** das Molverhältnis von Isocyanatgruppen (NCO) in den Verbindungen (a1) zu Bismut (Bi) in den organischen Bismutverbindungen (a3) 300 : 1 bis 20 :1 beträgt.

15. Rheologiehilfsmittel nach Anspruch 14, **dadurch gekennzeichnet, dass** das Molverhältnis NCO : Bi = 260 : 1 bis 25 : 1.

16. Rheologiehilfsmittel nach einem der Ansprüche 1 bis 15, **dadurch gekennzeichnet, dass** sie das Harnstoffderivat (A) in einer Menge von, bezogen auf das Rheologiehilfsmittel, mehr als 10 Gew.-% enthalten.

17. Rheologiehilfsmittel nach Anspruch 16, **dadurch gekennzeichnet, dass** sie das Harnstoffderivat (A) in einer Menge von, bezogen auf das Rheologiehilfsmittel, mehr als 10 bis 20 Gew.-% enthalten.

18. Rheologiehilfsmittel nach einem der Ansprüche 1 bis 17, **dadurch gekennzeichnet, dass** das Harnstoffderivat (A) kristallin ist.

19. Rheologiehilfsmittel nach Anspruch 18, **dadurch gekennzeichnet, dass** die Harnstoffderivat-Kristalle (A) nadelförmig und zum Teil oder insgesamt helixartig verdrillt sind.

20. Rheologiehilfsmittel nach Anspruch 18 oder 19, **dadurch gekennzeichnet, dass** die Harnstoffderivat-Kristalle (A) eine Teilchengröße von 0,1 bis 6 µm aufweisen.

21. Rheologiehilfsmittel nach Anspruch 20, **dadurch gekennzeichnet, dass** 80% der Harnstoffderivat-Kristalle (A) < 2 µm sind.

22. Rheologiehilfsmittel nach einem der Ansprüche 1 bis 21, **dadurch gekennzeichnet, dass** der Zusatzstoff (B) aus der Gruppe, bestehend aus Pigmenten, physikalisch, thermisch und/oder mit aktinischer Strahlung härtbaren, oligomeren und polymeren Bindemitteln, thermisch oder thermisch und mit aktinischer Strahlung härtbaren Vernetzungsmitteln, thermisch und/oder mit aktinischer Strahlung härtbaren Reaktiverdünnern, organischen Lösemitteln, Wasser, UV-Absorbern, Lichtschutzmitteln, Radikalfängern, Entlüftungsmitteln, Slipadditiven, Polymerisationsinhibitoren, Entschäumern, Emulgatoren, Netz- und Dipergiermitteln, Haftvermittlern, Verlaufmitteln, filmbildenden Hilfsmitteln, Flammschutzmitteln, Sikkativen, Trockungsmitteln, Hautverhinderungsmitteln, Korrosionsinhibitoren, Wachsen und Mattierungsmitteln; ausgewählt ist.

23. Verfahren zur Herstellung von flüssigen Rheologiehilfsmitteln, enthaltend mindestens ein Harnstoffderivat (A) und mindestens einen Zusatzstoff (B), gemäß einem der Ansprüche 1 bis 22, **dadurch gekennzeichnet, dass** man das Harnstoffderivat (A) durch die Umsetzung mindestens einer Verbindung (a1) mit mindestens einer Isocyanatgruppe mit mindestens einem Reaktionspartner (a2), ausgewählt aus der Gruppe, bestehend aus primären und sekundären Monoaminen und Polyaminen sowie Wasser; in der Gegenwart mindestens einer organischen Bismutverbindung (a3) als Katalysator in mindestens einem flüssigen Zusatzstoff (B) herstellt.

24. Verwendung der flüssigen Rheologiehilfsmittel gemäß einem der Ansprüche 1 bis 22 und der nach dem Verfahren gemäß Anspruch 23 hergestellten flüssigen Rheologiehilfsmittel für die Herstellung von Beschichtungsstoffen, Klebstoffe und Dichtungsmassen.

25. Verwendung nach Anspruch 24, **dadurch gekennzeichnet, dass** die Beschichtungsstoffe, Klebstoffe und Dichtungsmassen der Herstellung von Beschichtungen, Klebschichten und Dichtungen dienen.

26. Verwendung nach Anspruch 25, **dadurch gekennzeichnet, dass** die Beschichtungen, Klebschichten und Dichtungen dem Beschichten, Verkleben und Abdichten von Karosserien von Fortbewegungsmitteln und Teilen hiervon, Bauwerken und Teilen hiervon, Türen, Fenstern, Möbeln, industriellen Kleinteilen, mechanischen, optischen und elektronischen Bauteilen, Coils, Container, Emballagen, Glashohlkörpern und Gegenständen des täglichen Bedarfs dienen.

## Claims

1. Liquid rheological aids comprising
(A) at least one urea derivative preparable by reacting
(a1) at least one compound having at least one isocyanate group with
(a2) at least one co-reactant selected from the group consisting of primary and secondary monoamines and polyamines and also water, in the presence
(a3) of at least one organobismuth catalyst; and
(B) at least one additive.

2. Rheological aids according to Claim 1, **characterized in that** the organobismuth compound (a3) is selected from the group consisting of bismuth salts of organic carboxylic acids and complexes of bismuth with chelating agents.

3. Rheological aids according to Claim 2, **characterized in that** the organic carboxylic acids are aliphatic carboxylic acids.

4. Rheological aids according to Claim 3, **characterized in that** the aliphatic carboxylic acids are monocarboxylic acids.

5. Rheological aids according to Claim 4, **characterized in that** the monocarboxylic acids contain long-chain alkyl groups.

6. Rheological aids according to Claim 5, **characterized in that** the long-chain alkyl groups contain 6 to 16 carbon atoms.

7. Rheological aids according to Claim 6, **characterized in that** the monocarboxylic acids are selected from the group consisting of octanecarboxylic acid, 2-ethylhexanecarboxylic acid, and neodecanecarboxylic acid.

8. Rheological aids according to Claim 2, **characterized in that** the chelating agents are nonaromatic compounds.

9. Rheological aids according to Claim 8, **characterized in that** the chelating agents contain at least two functional groups capable of coordination to metal atoms or metal ions.

10. Rheological aids according to Claim 9, **characterized in that** the functional groups are electron donors.

11. Rheological aids according to Claim 9 or 10, **characterized in that** functional groups capable of coordination to metal atoms or metal ions are carbonyl groups.

12. Rheological aids according to Claim 11, **characterized in that** the chelating agents are 1,3-diketones.

13. Rheological aids according to Claim 12, **characterized in that** the diketones are selected from the group consisting of acetylacetone, ethyl acetoacetate, tetramethylheptanedione, and hexafluoropentanedione.

14. Rheological aids according to any of Claims 1 to 13, **characterized in that** the molar ratio of isocyanate groups (NCO) in the compounds (a1) to bismuth (Bi) in the organobismuth compounds (a3) is from 300 : 1 to 20 :1.

15. Rheological aids according to Claim 14, **characterized in that** the NCO : Bi molar ratio is from 260 : 1 to 25 : 1.

16. Rheological aids according to any of Claims 1 to 15, **characterized in that** they comprise the urea derivative (A) in an amount, based on the rheological aid, of more than 10% by weight.

17. Rheological aids according to Claim 16, **characterized in that** they comprise the urea derivative (A) in an amount, based on the rheological aid, of more than 10 to 20% by weight.

18. Rheological aids according to any of Claims 1 to 17, **characterized in that** the urea derivative (A) is crystalline.

19. Rheological aids according to Claim 18, **characterized in that** the urea derivative crystals (A) are acicular with a full or partial helical twist.

20. Rheological aids according to Claim 18 or 19, **characterized in that** the urea derivative crystals (A) have a particle size of from 0.1 to 6 *µ*m.

21. Rheological aids according to Claim 20, **characterized in that** 80% of the urea derivative crystals (A) are < 2 µm.

22. Rheological aids according to any of Claims 1 to 21, **characterized in that** the additive (B) is selected in particular from the group consisting of pigments, oligomeric and polymeric binders curable physically, thermally and/or with actinic radiation, crosslinking agents curable thermally or both thermally and with actinic radiation, reactive diluents curable thermally and/or with actinic radiation, organic solvents, water, UV absorbers, light stabilizers, free-radical scavengers, devolatilizers, slip additives, polymerization inhibitors, defoamers, emulsifiers, wetting agents, dispersants, adhesion promoters, leveling agents, film-forming auxiliaries, flame retardants, siccatives, dryers, antiskinning agents, corrosion inhibitors, waxes, and flatting agents.

23. Process for preparing liquid rheological aids comprising at least one urea derivative (A) and at least one additive (B), according to any of Claims 1 to 22, **characterized in that** it comprises preparing the urea derivative (A) by reacting at least one compound (a1) having at least one isocyanate group with at least one co-reactant (a2) selected from the group consisting of primary and secondary monoamines and polyamines and also water, in the presence of at least one organobismuth catalyst (a3), in at least one liquid additive (B).

24. Use of the liquid rheological aids according to any of Claims 1 to 22 and of the liquid rheological aids prepared by the process according to Claim 23 for preparing coating materials, adhesives, and sealants.

25. Use according to Claim 24, **characterized in that** the coating materials, adhesives, and sealants are used for producing coatings, adhesive layers, and seals.

26. Use according to Claim 25, **characterized in that** the coatings, adhesive layers, and seals are used for coating, adhesively bonding, and sealing bodies of means of transport and parts thereof, buildings and parts thereof, doors, windows, furniture, small industrial parts, mechanical, optical, and electronic components, coils, containers, packaging, hollow glassware, and articles of everyday use.

## Revendications

1. Adjuvants rhéologiques liquides, contenant :
(A) au moins un dérivé d'urée, pouvant être préparé en faisant réagir :
(a1) au moins un composé ayant au moins un groupe isocyanate avec
(a2) au moins un partenaire de réaction, choisi dans le groupe constitué de polyamines et de monoamines primaires et secondaires ainsi que d'eau, en présence de
(a3) au moins un composé organique au bismuth en tant que catalyseur ; et
(B) au moins un additif.

2. Adjuvants rhéologiques selon la revendication 1, **caractérisés en ce que** le composé organique au bismuth (a3) est choisi dans le groupe constitué de sels de bismuth d'acides carboxyliques organiques et de complexes du bismuth avec des agents chélatants.

3. Adjuvants rhéologiques selon la revendication 2, **caractérisés en ce que** les acides carboxyliques organiques sont des acides carboxyliques aliphatiques.

4. Adjuvants rhéologiques selon la revendication 3, **caractérisés en ce que** les acides carboxyliques aliphatiques sont des acides monocarboxyliques.

5. Adjuvants rhéologiques selon la revendication 4, **caractérisés en ce que** les acides monocarboxyliques contiennent des groupes alkyle à chaîne longue.

6. Adjuvants rhéologiques selon la revendication 5, **caractérisés en ce que** les groupes alkyle à chaîne longue contiennent 6 à 16 atomes de carbone.

7. Adjuvants rhéologiques selon la revendication 6, **caractérisés en ce que** les acides monocarboxyliques sont choisis parmi le groupe constitué de l'acide octanecarboxylique, de l'acide 2-éthylhexanecarboxylique et de l'acide néodécanecarboxylique.

8. Adjuvants rhéologiques selon la revendication 2, **caractérisés en ce que** les agents chélatants sont des composés non aromatiques.

9. Adjuvants rhéologiques selon la revendication 8, **caractérisés en ce que** les agents chélatants contiennent au moins deux groupes fonctionnels aptes à la coordination d'atomes métalliques ou d'ions métalliques.

10. Adjuvants rhéologiques selon la revendication 9, **caractérisés en ce que** les groupes fonctionnels sont des donneurs d'électrons.

11. Adjuvants rhéologiques selon la revendication 9 ou 10, **caractérisés en ce que** les groupes fonctionnels aptes à la coordination d'atomes métalliques ou d'ions métalliques sont des groupes carbonyle.

12. Adjuvants rhéologiques selon la revendication 11, **caractérisés en ce que** les agents chélatants sont des 1,3-dicétones.

13. Adjuvants rhéologiques selon la revendication 12, **caractérisés en ce que** les dicétones sont choisies parmi le groupe constitué de l'acétylacétone, de l'ester d'acide acétoacétique, du tétraméthylheptanedione et de l'hexafluoropentanedione.

14. Adjuvants rhéologiques selon l'une quelconque des revendications 1 à 13, **caractérisés en ce que** le rapport molaire des groupes isocyanate (NCO) dans les composés (a1) sur le bismuth (Bi) dans les composés organiques au bismuth (a3) est de 300:1 à 20:1.

15. Adjuvants rhéologiques selon la revendication 14, **caractérisés en ce que** le rapport molaire NCO:Bi = 260:1 à 25:1.

16. Adjuvants rhéologiques selon l'une quelconque des revendications 1 à 15, **caractérisés en ce qu'**ils contiennent le dérivé d'urée (A) en une quantité supérieure à 10 % en poids par rapport à l'adjuvant rhéologique.

17. Adjuvants rhéologiques selon la revendication 16, **caractérisés en ce qu'**ils contiennent le dérivé d'urée (A) en une quantité supérieure à 10 à 20 % en poids par rapport à l'adjuvant rhéologique.

18. Adjuvants rhéologiques selon l'une quelconque des revendications 1 à 17, **caractérisés en ce que** le dérivé d'urée (A) est cristallin.

19. Adjuvants rhéologiques selon la revendication 18, **caractérisés en ce que** les cristaux de dérivé d'urée (A) sont en forme d'aiguilles et partiellement ou complètement torsadés de manière hélicoïdale.

20. Adjuvants rhéologiques selon la revendication 18 ou 19, **caractérisés en ce que** les cristaux de dérivé d'urée (A) présentent une taille de particule de 0,1 à 6 *µ*m.

21. Adjuvants rhéologiques selon la revendication 20, **caractérisés en ce que** 80 % des cristaux de dérivé d'urée (A) sont < 2 *µ*m.

22. Adjuvants rhéologiques selon l'une quelconque des revendications 1 à 21, **caractérisés en ce que** l'additif (B) est choisi parmi le groupe constitué de pigments, de liants oligomères et polymères pouvant durcir de manière physique, thermique et/ou avec un rayonnement actinique, d'agents de réticulation pouvant durcir thermiquement ou thermiquement et avec un rayonnement actinique, de diluants réactifs pouvant durcir thermiquement et/ou avec un rayonnement actinique, de solvants organiques, d'eau, de produits absorbants les rayons UV, d'agents de protection contre la lumière, d'amorceurs de radicaux, d'agents de dégazage, d'additifs de lubrification, d'inhibiteurs de polymérisation, d'agents antimousse, d'émulsifiants, d'agents tensioactifs et dispersants, d'agents adhésifs, d'agents d'écoulement, d'adjuvants filmogènes, d'agents d'ignifugation, de siccatifs, d'agents de séchage, d'agents empêchant la création de peaux, d'inhibiteurs de corrosion, de cires et d'agents de dépolissage.

23. Procédé de préparation d'adjuvants rhéologiques liquides contenant au moins un dérivé d'urée (A) et au moins un additif (B), selon l'une quelconque des revendications 1 à 22, **caractérisé en ce que** le dérivé d'urée (A) est préparé par la réaction d'au moins un composé (a1) ayant au moins un groupe isocyanate avec au moins un partenaire de réaction (a2) choisi dans le groupe constitué de polyamines et de monoamines primaires et secondaires ainsi que d'eau ; en présence d'au moins un composé organique au bismuth (a3) en tant que catalyseur dans au moins un additif liquide (B).

24. Utilisation des adjuvants rhéologiques liquides selon l'une quelconque des revendications 1 à 22 et des adjuvants rhéologiques liquides préparés par le procédé selon la revendication 23, pour la fabrication de revêtements de surface, de colles et de pâtes d'étanchéité.

25. Utilisation selon la revendication 24, **caractérisée en ce que** les revêtements de surface, les colles et les pâtes d'étanchéité servent à la fabrication de revêtements, de couches de colles et de joints d'étanchéité.

26. Utilisation selon la revendication 25, **caractérisée en ce que** les revêtements, les couches de colles et les joints d'étanchéificiation servent à l'enduction, au collage et à l'étanchéisation de carrosseries de moyens de locomotion et de parties de celles-ci, d'édifices et de parties de ceux-ci, de portes, de fenêtres, de meubles, de petites pièces industrielles, d'éléments mécaniques, optiques et électroniques, de ressorts, de conteneurs, d'emballages, de corps creux en verre et d'articles d'usage courant.
